# EUROPÄISCHE PATENTSCHRIFT

(11) **EP 0 377 608 B1**
(45) Veröffentlichungstag und Bekanntmachung des Hinweises auf die Patenterteilung: **29.12.1993**
(21) Anmeldenummer: 88907268.2
(22) Anmeldetag: 20.08.1988
(51) Int. Cl.: A01B 15/14

(54) **PFLUG**
PLOUGH
CHARRUE

(30) Priorität: 28.08.1987 DE 3728789
(43) Veröffentlichungstag der Anmeldung: 18.07.1990
(73) Patentinhaber: Bayerische Pflugfabrik GmbH, 86899 Landsberg (DE)
(72) Erfinder: PÖTTINGER, Klaus, A-4710 Grieskirchen (AT)
(74) Vertreter: Dupal, Helmut, Dipl-Ing.
(86) Internationale Anmeldenummer: EP8800744
(87) Internationale Veröffentlichungsnummer: WO8901734

(56) Entgegenhaltungen:
- GB-A- 2 144 312

## Beschreibung

Die Erfindung bezieht sich auf einen Pflug mit den Merkmalen des Oberbegriffes 1.

Bei Pflügen dieser Art erfolgt die Verstellung der Schnittbreite aller Pflugkörper mit einem Verstellglied, das auf eine Stellstange einwirkt, die im wesentlichen parallel zum Pflugrahmen verläuft und an Auslegern der Pflugkörperhalter, die am Pflugrahmen verschwenkbar gelagert sind, angelenkt ist.

Aus der GB-A-2144312 ist ein Pflug bekannt geworden, bei dem die Vorrichtung zum Verstellen der Schnittbreite der Pflugkörper mit einem Verstellglied versehen ist, das über eine Koppelstange gelenkig mit einer Stellstange verbunden ist, an der die Pflugkörperhalter aller Pflugkörper angelenkt sind, die am Rahmen über aufrechte, in Fahrtrichtung des Pfluges vorne liegende Achsen verschwenkbar gelagert sind, die den Rohrträger des Pflugrahmens beiderseits umgreifen.

Wegen der auftretenden Kräfte, die die Pflugkörperhalter auf Biegung belasten, müssen diese breitflächig und stark ausgeführt werden, ebenso müssen die Lager wegen der großen Biegekräfte entsprechend kräftig ausgelegt sein.

Diese Anordnung bringt ungünstige Belastungsverhältnisse mit sich, weil die auftretenden Kräfte die Bauteile besonders auf Biegung beanspruchen und die Stellstange voll belasten, so daß alle belasteten Bauteile entsprechend stark und damit schwer ausgeführt und die Schwenklager für die hohen Belastungen ausgelegt sein müssen.

Aufgabe der Erfindung ist es bei einem Pflug nach dem Gattungsbegriff des Anspruches 1 ein Verstellgetriebe zu schaffen, das die beschriebenen Nachteile nicht aufweist und eine einfache Ausführung ermöglicht.

Diese Aufgabe wird mit den Merkmalen des kennzeichnenden Teiles des Anspruches 1 gelöst.

Es ergeben sich durch die Wahle der Anlenkstellen der bewegten Teile und die Lage der Hebel sehr günstige Belastungsverhältnisse, wobei vorwiegend Zug-oder Druckbelastungen auftreten und die Stellstange und die Pflugkörperhalter sowie die Lagerungen sehr wesentlich entlastet werden.

In den Unteransprüchen 2 bis 8, die ausdrücklich einen Teil der Beschreibung darstellen, werden besonders vorteilhafte Ausgestaltungen der Erfindung beansprucht.

Durch die Anwendung eines kleinen Öffnungswinkels zwischen Lenkhebel und Verstellhebel ist eine große Verstellgenauigkeit erzielbar. Die Lagerung der Verstellhebel an Konsolen der Pflugkörperhalter ermöglicht eine günstige Ausrichtung derselben.

Die doppelte Ausführung der Lenkhebel und Verstellhebel, die beiderseits des Pflugrahmens angeordnet an Achszapfen gelagert sind, erhöht die Steifigkeit der Anordnung sehr wesentlich. Die übergreifende Lagerung der längeren Verstellhebel vergrößert dabei den möglichen Verstellbereich auf einfache Weise.

Die Ausbildung der Pflugkörperhalter als großflächige Teile erhöht die Steifigkeit, wobei die für die Lagerung der Lenkhebel vorgesehenen Ausnehmungen diese nicht beeinträchtigen.

Die Erfindung wird an Hand der Zeichnung einer Ausführungsform beschrieben.
Es zeigt :

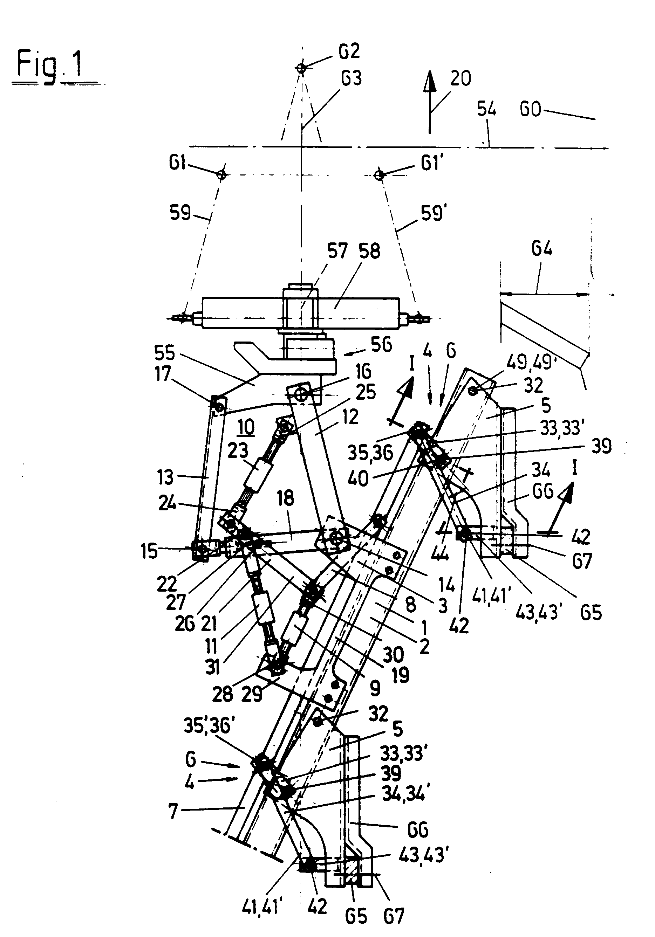

- Fig. 1: eine Draufsicht auf einen Pflug mit Verstellglied und Verstellgetriebe, bei dem der Pflugrahmen nach dem zweiten Pflugkörper abgeschnitten ist und bei dem die Pflugkörper nicht dargestellt sind und

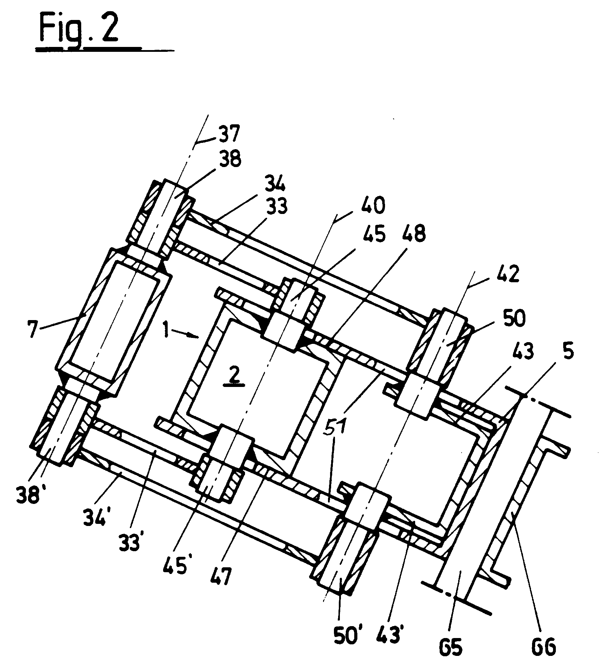

- Fig. 2: einen Querschnitt durch den Pflug nach Fig.1 nach I-I.

Der dargestellte Pflug besteht aus einem Pflugrahmen 1, der aus einem Rohrträger 2 mit quadratischem Querschnitt besteht, an dem ein Rahmenhalter 19 angeschraubt ist, der eine vordere Konsole 3 trägt, auf der die hintere Schwenkachse 14 des rechten Längslenkers 12 eines Gelenkviereckes 10 zusammen mit dessen hinterer Querstrebe 18 schwenkbar gelagert ist. Die Querstrebe 18 ist andernends an der hinteren Schwenkachse 15 des linken Längslenkers 13 angelenkt.

Die Längslenker 12 und 13 sind mit den vorderen Enden an den vorderen Schwenkachsen 16 und 17 verschwenkbar gelagert, die auf einer Konsole 55 eines Wendekörpers 56 angebracht sind, der auf einer Wendewelle 57 des Pfluges befestigt ist.

Die Wendewelle 57 ist in der Koppel 58 des Pfluges gelagert, die an den beiden Unterlenkern 59,59' und dem nicht dargestellten Oberlenker des Schleppers angebracht ist, dessen rechtes Hinterrad 60 angedeutet ist, ebenso wie die Schlepperhinterachse 54 und die schlepperseitigen Anlenkstellen 61,61' der Unterlenker 59,59'. Schließlich ist noch der Führungspol 62 des Gelenkviereckes der Unterlenker 59,59' in der mittleren Normallage auf der Längsmittelachse 63 der Koppel 58 liegend dargestellt.

Am rechten Hinterrad 60 des Schleppers ist eine Schnittbreite 64 des vordersten Pflugkörpers angedeutet.

An der hinteren Querstrebe 18 ist ein Übertragungshebel 21 schwenkbar gelagert, der an seinem, dem Gelenkviereck 10 zugewandten Ende 22 mit dem hinteren Ende 24 eines längenveränderbaren Einstellelementes 23 gelenkig gekoppelt ist, das mit dem vorderen Ende 25 an dem rechten Längslenker 12 angelenkt ist.

Auf dem Übertragungshebel 21 ist zwischen dessen Lagerstelle 26 und dem Ende 22 des Übertragungshebels 21 das vordere Ende 27 des Einstellgliedes 11 angelenkt, das sich andernends an einer Lagerung 28 auf einer hinteren Konsole 29 des Rahmenhalters 19 abstützt. An der gleichen Lagerung 28 ist ein Verstellglied 9 angelenkt, das über eine am anderen Ende 30 angelenkte Koppelstange 8 mit der Stellstange 7 gelenkig verbunden ist und an dessen vorderem Ende 30 gleichzeitig das pflugrahmenseitige Ende 31 des Übertragungshebels 21 angelenkt ist.

Die Vorrichtung 6 zur Schnittbreitenverstellung besteht für jeden pflugkörper aus einem Verstellgetriebe 4, das einen Pflugkörperhalter 5 verstellt, der mit dem vorderen, in Fahrtrichtung 20 am Rahmen um eine aufrechte Schwenkachse 32 verschwenkbar angelenkt ist, wobei der Pflugkörperhalter 5 den Rohrträger 2 des Pflugrahmens 1 beidseitig umgreift und beiderseits, oben und unten, gelagert ist.

Das Verstellgetriebe 4 besteht aus Lenkhebel 33,33' und einem Verstellhebel 34,34', die oberhalb und unterhalb von Rohrträger 2 und Stellstange 7mit ihren stellstangenseitigen Enden 35,35', 36,36' um eine aufrechte Koppelachse 37, die aus zwei Tragzapfen 38,38' an der Stellstange 7, besteht, gelagert sind.

Die pflugrahmenseitigen Enden 39,39' der Lenkhebel 33,33' sind um eine aufrechte Schwenkachse 40 am Rohrträger 2 des Pflugrahmens 1 verschwenkbar gelagert .

Das pflugkörperseitige Ende 41,41' des Verstellhebels 34,34' ist um eine aufrechte, am Pflugkörperhalter 5 angebrachte Gelenkachse 42 schwenkbar angelenkt, die auf Konsolen 43,43' des Pflugkörperhalters 5 angebracht ist.

In Fahrtrichtung 20 gesehen ist die Schwenkachse 40 der Lenkhebel 33,33' zwischen den Gelenkachsen 42 der Verstellhebel 34,34' und der Achse 32 des Pflugkörperhalters 5 angeordnet und die Lenkhebel 33,33' und die Verstellhebel 34, 34' nehmen über den Verstellbereich der Schnittbreite, zueinander einen spitzen Öffnungswinkel geringer Öffnung ein.

Die Achsen 32 des Pflugkörperhalters 5 und die Schwenkachsen 40 des Lenkhebels 33,33' sind an der Oberseite 48 und an der Unterseite 47 des Rohrträgers 2 als Lagerzapfen 49,49' und als Achszapfen 45,45', die Koppelachse 37 als Tragzapfen 38,38' ausgebildet auf der Stellstange 7 und die Gelenkachse 42 oberhalb und unterhalb des Rohrträgers 2 als Koppelzapfen 50,50' ausgebildet, auf den Konsolen 43,43' des Pflugkörperhalters 5 angebracht.

Das Verstellglied 9 ist als Verstellschraubspindel oder als hydraulisches Verstellmittel für Fernbedienung ausgestattet.

Bei Verstellung der Stellstange 7 wird das Verstellgetriebe 4 betätigt und die Bewegung der Lenkhebel 33,33' quer zum Pflugrahmen 1 bzw. zum Rohrträger 2 wird über die Verstellhebel 34,34' in eine Schwenkbewegung des Pflugkörperhalters 5 umgesetzt.

Die Anlenkung der Verstellhebel 34,34' am hinteren Ende des Pflugkörperhalters 5 ergibt für diesen durch den großen Abstand von der Achse 32 eine verhältnismäßig geringe Krafteinwirkung. Die Anordnung des Verstellhebels 34,34' zum Lenkhebel 33,33' ergibt eine verhältnismäßig geringe Belastung auf Biegung und eine sehr geringe Belastung der Stellstange 7 in Verstellrichtung.

Die Pflugkörper - nicht dargestellt - sind an Pflugkörperstielen 65 befestigt, die am Pflugkörperhalter 5 mit einem Gegenhalter 66 und einer Verschraubung 67 eingespannt sind.

Die Berichtigung der Ausrichtung der Pflugkörper geschieht durch die Verstellbewegung des Übertragungshebels 21 über die Verstellung des Gelenkviereckes 10 und der Stellung des Einstellgliedes 10.

### Verzeichnis der Bezugszeichen :

- 1: Pflugrahmen
- 2: Rohrträger
- 3: vordere Konsole des Rahmenhalters 19
- 4: Verstellgetriebe
- 5: Pflugkörperhalter
- 6: Vorrichtung zur Schnittbreitenverstellung
- 7: Stellstange
- 8: Koppelstange
- 9: Verstellglied
- 1O: Gelenkviereck
- 11: längenveränderbares Einstellglied für die Einstellung der Arbeitsbreite bzw. Vorfurchenbreite
- 12: rechter Längslenker des Gelenkviereckes 1O
- 13: linker Längslenker des Gelenkviereckes 1O
- 14: hintere Schwenkachse des rechten Längslenkers 12
- 15: hintere Schwenkachse des linken Längslenkers 13
- 16: vordere Schwenkachse des rechten Längslenkers 12
- 17: vordere Schwenkachse des linken Längslenkers 13
- 18: hintere Querstrebe des Gelenkviereckes 1O
- 19: Rahmenhalter
- 2O: Fahrtrichtung
- 21: Übertragungshebel
- 22: gelenkviereckseitiges Ende des Übertragungshebels 21
- 23: längenveränderbares Einstellelement des Gelenkviereckes 1O
- 24: hinteres Ende des Einstellelementes 23
- 25: vorderes Ende des Einstellelementes 23
- 26: Lagerstelle des Übertragungshebels 21
- 27: vorderes Ende des Einstellgliedes 11
- 28: Lagerung des Einstellgliedes 11
- 29: hintere Konsole des Rahmenhalters 19
- 3O: vorderes Ende des Verstellgliedes 9
- 31: pflugrahmenseitiges Ende des Übertragungshebels 21
- 32: Achse des Pflugkörperhalters 5
- 33,33': Lenkhebel des Verstellgetriebes 4
- 34,34': Verstellhebel
- 35,35': stellstangenseitiges Ende des Lenkhebels 33,33'
- 36,36': stellstangenseitiges Ende des Verstellhebels 34,34'
- 37: aufrechte Koppelachse der Stellstange 7 für Lenkhebel 33,33' und Verstellhebel 34,34'
- 38,38': Tragzapfen der stellstangenseitigen Koppelachse 37
- 39,39': pflugrahmenseitiges Ende des Lenkhebels 33,33'
- 40: Schwenkachse des Lenkhebels 33,33'
- 41,41': pflugkörperseitiges Ende des Verstellhebels 34,34'
- 42: aufrechte Gelenkachse für den Verstellhebel 34,34'
- 43,43': Konsolen des Pflugkörperhalters 5
- 44: Öffnungswinkel zwischen Lenkhebel 33,33' und Verstellhebel 34,34'
- 45,45': Achszapfen der Schwenkachse 40
- 46:
- 47: Unterseite des Rohrträgers 2 des Pflugrahmens 1
- 48: Oberseite des Rohrträgers 2 des Pflugrahmens 1
- 49,49': Lagerzapfen der Achse 32
- 50,50': Koppelzapfen der Gelenkachse 42
- 51: Öffnung im pflugkörperhalter 5
- 52:
- 53:
- 54: Schlepperhinterachse
- 55: Konsole des Wendekörpers 56
- 56: Wendekörper
- 57: Wendewelle
- 58: Koppel des Pfluges
- 59,59': Unterlenker
- 60: rechtes Hinterrad des Schleppers
- 61,61': schlepperseitige Anlenkstellen der Unterlenker 59,59'
- 62: Führungspol des Gelenkviereckes der Unterlenker
- 63: Längsmittelachse der Koppel 58
- 64: Schnittbreite des vordersten Pflugkörpers
- 65: Pflugkörperstiel
- 66: Gegenhalter
- 67: Verschraubung

## Patentansprüche

1. Pflug mit einer Vorrichtung zum Verstellen der Schnittbreite der Pflugkörper mit einem Verstellglied (9), das über eine Koppelstange (8) gelenkig mit einer Stellstange (7) verbunden ist, an die Verstellgetriebe (4) angekoppelt sind, die die Pflugkörper durch Verschwenken von Pflugkörperhaltern (5) verstellen, die am Pflugrahmen (1), bestehend aus einem Rohrträger (2),diesen umgreifend, an den in Fahrtrichtung(20) vorn liegenden Enden um aufrechte Schwenkachsen (32) verschwenkbar gelagert sind, dadurch gekennzeichnet, daß das Verstellgetriebe (4) eines jeden Pflugkörperhalters (5), das vom Verstellglied (9) über Koppelstange (8) und Stellstange (7) angetrieben ist, wenigstens aus einem Lenkhebel (33,33') und einem Verstellhebel (34,34') besteht, die mit den stellstangenseitigen Enden (35,35',36,36') an nahe benachbarten Achsen oder um eine gemeinsame aufrechte Achse (37) auf der Stellstange (7) gelenkig gelagert sind, wobei das pflugrahmenseitige Ende (39,39') des Lenkhebels (33,33') an einer aufrechten Schwenkachse (4O) am Pflugrahmen (1) und das pflugkörperseitige Ende (41,41') des Verstellhebels (34,34') am Pflugkörperhalter (5) um eine aufrechte. Gelenkachse(42) verschwenkbar gelagert ist und in Fahrtrichtung (2O) gesehen die Schwenkachse (4O) des Lenkhebels (33,33') nach der Gelenkachse (42) des Verstellhebels (34,34'), zwischen diesem und der Schwenkachse (32) des Pflugkörperhalters (5) angeordnet ist.

2. Pflug nach dem vorhergehenden Anspruch, dadurch gekennzeichnet, daß Lenkhebel (33,33') und Verstellhebel (34,34') miteinander über den Verstellbereich der Schnittbreite einen möglichst kleinen,spitzen Öffnungswinkel (44) einschließen.

3. Pflug nach einem oder mehreren der vorhergehenden Ansprüche, dadurch gekennzeichnet, daß die Verstellhebel (34,34') an Konsolen (43,43') der Pflugkörperhalter (5) gelagert sind.

4. Pflug nach einem oder mehreren der vorhergehenden Ansprüche, dadurch gekennzeichnet, daß die Lenkhebel (33,33') an der Oberseite (48) und der Unterseite (47) des Pflugrahmens (1) bzw. des Rohrträgers (2) an der als Achszapfen (45 und 45') ausgebildeten Schwenkachse (40) und der Pflugkörperhalter (5) an der als Lagerzapfen (49 und 49') ausgebildeten Achse (32) an der Oberseite (48) und an der Unterseite (47) des Rohrträgers (2) gelagert sind.

5. Pflug nach einem oder mehreren der vorhergehenden Ansprüche, dadurch gekennzeichnet, daß die Lenkhebel (33,33')und die Verstellhebel (34,34') an der als Tragzapfen (38,38') ausgebildeten stellstangenseitigen Koppelachse (37) an der Oberseite und an der Unterseite der Stellstange (7) und die Verstellhebel (34,34') oberhalb und unterhalb des Rohrträgers (2) an der als Koppelzapfen (50,50') ausgebildeten Gelenkachse (42), die an Konsolen (43,43') des Pflugkörperhalters (5) angeordnet ist, gelagert sind.

6. Pflug nach einem oder mehreren der vorhergehenden Ansprüche, dadurch gekennzeichnet, daß die Verstellhebel (34,34') an den Koppelzapfen (50,50') in Bezug auf die Lenkhebel (33,33') nach außen zu angeordnet gelagert sind.

7. Pflug nach einem oder mehreren der vorhergehenden Ansprüche, dadurch gekennzeichnet, daß die Pflugkörperhalter (5) im Bereich der Schwenkachsen (40) bzw.der Achszapfen (45,45') der Lenkhebel (33,33') mit einer Öffnung (51) für den Verstellbereich der Pflugkörperhalter (5) versehen sind.

8. Pflug nach einem oder mehreren der vorhergehenden Ansprüche, dadurch gekennzeichnet, daß sich das Verstellglied (9) am Pflugrahmen (1) bzw. dem Rohrträger (2) gelenkig abstützt und entweder als Stellschraubspindel oder als hydraulisches Verstellmittel ausgebildet ist.

## Claims

1. Plough with a device to adjust the furrow width of the plough bodies, comprising an adjusting element (9) hinged by way of a coupling bar (8) to a positioning bar (7) to which adjusting gearings (4) are coupled that adjust the plough bodies by swivelling the plough body legs ( 5) which are pivoted to the plough frame (1) - consisting of a tubular support (2) and surrounding the latter - on the front ends, seen in the direction of motion, upon swivel axles, characterised in that the adjusting gearing (4) of each plough body leg (5) that is driven by the adjusting element (9) by way of the coupling bar (8) and positioning bar (7), comprises at least a steering lever (33, 33') and an adjusting lever (34, 34') which are hinged with those ends (35, 35', 36, 36' ) that are turned towards the positioning bar to nearby situated axles or upon a common upright axle (37) to the positioning bar (7), that end (39, 39') of the steering lever (33, 33'), that is turned towards the plough frame, being pivoted to an upright swivel axle (40) on the plough frame (1) and that end (41, 41') of the adjusting lever (34, 34'), that is turned towards the plough body, being pivoted to the plough body leg (5) on an upright articulated axle (42) and, seen in the dircetion of motion, the swivel axle (40) of the steering lever (33, 33') being arranged behind the articulated axle (42) of the adjusting lever (34, 34'), between the latter and the swivel axle (32) of the plough body leg (5).

2. Plough according to the preceding claim, characterised in that over the adjusting area of the furrow width the steering lever (33, 33') and the adjusting levers (34, 34') confine a gap angle that is as small and acute as possible.

3. Plough according to one or several of the preceding claims, characterised in that the adjusting lever (34, 34') are pivoted to brackets (43, 43') of the plough body legs (5).

4. Plough according to one or several of the preceding claims, characterised in that the steering levers (33, 33') on the upper side (48) and the bottom (47) of the plough frame (1) respectively of the tubular support (2) are pivoted to the swivel axle (40), designed as axle pivot (45 and 45'), and that the plough body leg (5) is pivoted to that axle (32) that is designed as journals (49 and 49') on the upper side (48) and the bottom (47) of the tubular support (2).

5. Plough according to one or several of the preceding claims, characterised in that the steering levers (33, 33') and the adjusting levers (34, 34') are pivoted to the coupling axle (37) that is turned towards the positioning bar, designed as a supporting pivot (38, 38') on the upper side and the bottom of the positioning bar (7) and that the adjusting levers (34, 34') above and below the tubular support (2) are pivoted to the articulated axle (42), designed as coupling pivot (50, 50'), which is arranged on brackets (43, 43') on the plough body leg (5).

6. Plough according to one or several of the preceding claims, characterised in that the adjusting levers (34, 34') are pivoted to the coupling pivots (50, 50'), being arranged outwards in relation to the steering levers (33, 33').

7. Plough according to one or several of the preceding claims, characterised in that in the area of the swivel axles (40) respectively of the axle pivots (45, 45') of the steering levers (33, 33'), the plough body legs (5) are provided with an opening for the adjusting area of the plough body legs (5).

8. Plough according to one or several of the preceding claims, characterised in that the adjusting element (9) is supported in an articulated manner against the plough frame (1) respectively against the tubular support (2) and that it is designed either as adjusting screw spindle or as hydraulic adjusting device.

## Revendications

1. Charrue comprenant un dispositif de réglage de la largeur de coupe des corps de charrue comportant un organe de réglage (9) qui est relié de façon articulée à une tige de réglage (7) par une tige d'accouplement (8), tige de réglage à laquelle sont accouplés des mécanismes de réglage (4) qui règlent les corps de charrue par pivotement de supports de corps de charrue (5) qui sont montés de façon pivotante sur des axes de pivotement verticaux (32) à leurs extrémités situées à l'avant dans la direction de la marche (20) sur le châssis de charrue (1) constitué par un support tubulaire (2) et entourant ce dernier, caractérisée en ce que le mécanisme de réglage (4) de chaque support de corps de charrue (5) qui est entraîné par l'organe de réglage (9) par l'intermédiaire de la tige d'accouplement (8) et la tige de réglage (7) est constitué par au moins un levier de direction (33, 33') et un levier de réglage (34, 34'), qui sont montés de façon articulée par leurs extrémités (35, 35', 36, 36') situées du côté de la tige de réglage sur des axes très voisins ou autour d'axes verticaux communs (37) sur la tige de réglage (7), l'extrémité (39, 39') du levier de direction (33, 33') qui est située du côté du châssis de charrue étant montée de façon pivotante sur un axe de pivotement vertical (40) sur le châssis de charrue (1), et l'extrémité (41, 41') du levier de réglage (34, 34') qui est située du côté des corps de charrue étant montée de façon pivotante sur le support de corps de charrue (5) sur un axe d'articulation vertical (42) et, vu dans la direction de la marche (20), l'axe de pivotement (40) du levier de direction (33, 33') est disposé après l'axe d'articulation (42) du levier de réglage (34, 34') entre celui-ci et l'axe de pivotement (32) du support (5) de corps de charrue.

2. Charrue selon la revendication précédente, caractérisée en ce que le levier de direction (33, 33') et le levier de réglage (34, 34') forment entre eux sur la plage de réglage de la largeur de coupe un angle d'ouverture aigu (44) aussi petit que possible.

3. Charrue selon une ou plusieurs des revendications précédentes, caractérisée en ce que les leviers de réglage (34, 34') sont montés sur des consoles (43, 43') du support de corps de charrue (5).

4. Charrue selon une ou plusieurs des revendications précédentes, caractérisée en ce que les leviers de direction (33, 33') sont montés sur le côté supérieur (48) et le côté inférieur (47) du châssis de charrue (1) ou du support tubulaire (2) sur des axes de pivotement (40) constitués sous forme de tourillons (45 et 45'), et le support de corps de charrue (5) sur des axes (32) constitués sous forme de tourillons de support (49 et 49') sur le côté supérieur (48) et sur le côté inférieur (47) du support tubulaire (2).

5. Charrue selon une ou plusieurs des revendications précédentes, caractérisée en ce que les leviers de direction (33, 33') et les leviers de réglage (34, 34') sont montés sur l'axe d'accouplement (37) situé du côté de la tige de réglage et constitué sous forme de tourillons de support (38, 38') sur le côté supérieur et sur le côté inférieur de la tige de réglage (7), et les leviers de réglage (34, 34') sont montés au-dessus et au-dessous du support tubulaire (2) sur l'axe d'articulation (42) constitué sous forme de tourillons d'accouplement (50, 50') qui sont montés sur des consoles (43, 43') du support de corps de charrue (5).

6. Charrue selon une ou plusieurs des revendications précédentes, caractérisée en ce que les leviers de réglage (34, 34') sont montés en étant disposés vers l'extérieur par rapport aux leviers de direction (33, 33') sur les tourillons d'accouplement (50, 50').

7. Charrue selon une ou plusieurs des revendications précédentes, caractérisée en ce que les supports de corps de charrue (5) comprennent dans la région des axes de pivotement (40) ou des tourillons (45, 45') des leviers de direction (33, 33') une ouverture (51) destinée à la plage de réglage des supports de corps de charrue (5).

8. Charrue selon une ou plusieurs des revendications précédentes, caractérisée en ce que l'organe de réglage (9) s'appuie de façon articulée sur le châssis de charrue (1) ou sur le support tubulaire (2) et est constitué soit sous forme d'une broche de réglage à vis soit sous forme d'un moyen de réglage hydraulique.
